# EUROPEAN PATENT APPLICATION

(11) **EP 4 046 831 A1**
(43) Date of publication of application: **24.08.2022**
(21) Application number: 21728408.2
(22) Date of filing: 27.01.2021
(51) Int. Cl.: B60C 23/04

(54) **TIRE PRESSURE SENSING SYSTEM**

(30) Priority: 21.12.2020 CN 202011520683
(71) Applicant: Hamaton Automotive Technology Co., Ltd., Zhejiang 311199 (CN)
(72) Inventor: ZHANG, Jianer, Zhejiang 311100 (CN); DING, Haijun, Zhejiang 311100 (CN); YU, Mingguang, Zhejiang 311100 (CN)
(74) Representative: Raffay & Fleck
(86) International application number: PCT/CN2021/073955
(87) International publication number: WO 2022/134265

(57) **Abstract**

The present application provides a tire pressure sensing system, comprising: a cloud server, an intelligent communication terminal and several tire pressure sensing devices; wherein the tire pressure sensing device is provided with a tire pressure sensor, and is configured to send target acquisition data to the intelligent communication terminal after establishing communication with the intelligent communication terminal; the target acquisition data comprises an ID of the tire pressure sensing device; after receiving the target acquisition data, the intelligent communication terminal sends at least the ID of the tire pressure sensing device in the target acquisition data in combination with location information of the intelligent communication terminal to the cloud server for storage and/or data analysis. By the system, the tire pressure sensing devices that have been arranged are effectively utilized; management personnel may collect the location distribution of all the tire pressure sensing devices in use through the cloud server, which may effectively provide the anti-channel conflict management and facilitate the division of districts to which service providers, sales networks and after-sales teams belong through the cloud server; and the installation status of tire pressure sensing devices worldwide may be obtained according to the location information of the sensors.

## Description

### CROSS-REFERENCE TO RELATED APPLICATION

The present application claims priority to Chinese application No. 202011520683.5 filed on December 21, 2020, entitled "Tire Pressure Sensing System", which is hereby incorporated by reference in its entirety.

### FIELD OF TECHNOLOGY

The present application relates to the technical field of tire pressure monitoring, in particular to a tire pressure sensing system.

### BACKGROUND

A tire pressure monitoring system (TPMS) refers to an auxiliary safety system installed on car tires for real-time monitoring of tire pressure. By installing a high-sensitivity tire pressure sensing device with transmitting and receiving functions on each wheel, the tire pressure, temperature inside the tire and other data may be monitored in real time when driving or stationary, and the data are transmitted to an external controller through wireless radio frequency, so that when the tires are leaking or low in pressure, an alarm is issued to ensure driving safety. From November 1, 2014, TPMS must be installed on all newly sold passenger cars under the European Union regulations. Since the tire is a quick-wear part and needs to be replaced with a new tire after a few years of use, the tire pressure sensing device is generally replaced with a new one at the same time when the tire is replaced.

The tire pressure sensing devices currently available on the market are mainly those with interchangeable manufacturer codes. Tire service providers or 4S stores only need to purchase one type, select a corresponding manufacturer code when needed and then install the manufacturer code on the corresponding tire, greatly reducing management overhead and stocking costs. For this type of sensor, tools or other devices are required to communicate via LF (low frequency)/RF (radio frequency) wireless methods, which are mainly used in the automotive aftermarket.

For the current tire pressure sensing devices, when the manufacturer code is updated, only the manufacturer code issued by a handheld coding device is received, thus the utilization rate of the tire pressure sensing device is low and the function thereof cannot be fully utilized.

### SUMMARY

In view of the problems existing in the prior art, the present application provides a tire pressure sensing system.

The present application provides a tire pressure sensing system, including: a cloud server, an intelligent communication terminal and several tire pressure sensing devices; wherein the tire pressure sensing device is provided with a tire pressure sensor, and is configured to send target acquisition data to the intelligent communication terminal after establishing communication therewith; the target acquisition data includes an ID of the tire pressure sensing device; the intelligent communication terminal is configured to send at least the ID of the tire pressure sensing device in the target acquisition data in combination with location information of the intelligent communication terminal to the cloud server after receiving the target acquisition data; and the cloud server is configured to store and/or analyze the received target acquisition data.

In a tire pressure sensing system according to an embodiment of the present application, the target acquisition data further includes: any one or more of an ex-factory date of the tire pressure sensing device, software and hardware versions of the tire pressure sensing device, a transmission protocol of the tire pressure sensing device, a transmission frequency of the tire pressure sensing device, a radio frequency modulation mode of the tire pressure sensing device, a battery power of the tire pressure sensing device, tire pressure data, a temperature inside the tire, driving speed monitoring data and a vehicle model.

In a tire pressure sensing system according to an embodiment of the present application, the intelligent communication terminal is further configured to, after receiving the target acquisition data, send all data in the target acquisition data, or a part of the data including the ID of the tire pressure sensing device, to the cloud server for storage and/or data analysis.

In a tire pressure sensing system according to an embodiment of the present application, the cloud server is further configured to, after performing data analysis on the target acquisition data, store data analysis results obtained and/or send the data analysis results to the intelligent communication terminal for being displayed; wherein the data analysis results include an estimated lifetime of a tire and/or a current state of a tire.

In a tire pressure sensing system according to an embodiment of the present application, communication modes between the tire pressure sensing device and the intelligent communication terminal include any one or more of NFC, Bluetooth, WIFI, and LF/RF

In a tire pressure sensing system according to an embodiment of the present application, the tire pressure sensing device is further configured to upload attribute information to the cloud server for pre-storage before delivery, and correspondingly: the tire pressure sensing device sends acquired latest attribute information to the cloud server via the intelligent communication terminal after establishing communication with the intelligent communication terminal, or the intelligent communication terminal generates latest attribute information according to communication data and send the latest attribute information to the cloud server; the cloud server analyzes and obtains usage information of the tire pressure sensing device according to the pre-stored attribute information and the received latest attribute information; where the attribute information includes any one or more of the ID of the tire pressure sensing device, current time information, and power information; the usage information includes one or more of a time of first use of tire pressure sensing device, an elapsed time from delivery to first use, and a degree of power consumption.

In a tire pressure sensing system according to an embodiment of the present application, the tire pressure sensing device is provided with a storage area for storing model information and corresponding manufacturer codes; the tire pressure sensing device is further configured to, after receiving a code update instruction and the model information sent by the intelligent communication terminal, search for and obtain a manufacturer code corresponding to the model information from the storage area according to the model information, and operate according to the obtained manufacturer code.

In a tire pressure sensing system according to an embodiment of the present application, the tire pressure sensing device is further configured to send query failure information to the intelligent communication terminal when the corresponding manufacturer code is not found in the storage area.

In a tire pressure sensing system according to an embodiment of the present application, the model information and the corresponding manufacturer codes are stored in the cloud server; the intelligent communication terminal is further configured to, after receiving the query failure information, obtain the manufacturer code corresponding to the model information from the cloud server and send the manufacturer code to the tire pressure sensing device, and the tire pressure sensing device operates according to the obtained manufacturer code.

In a tire pressure sensing system according to an embodiment of the present application, the model information and the corresponding manufacturer codes are stored in the cloud server; the tire pressure sensing device is configured to operate according to the obtained manufacturer code after receiving the manufacturer code sent by the intelligent communication terminal; wherein the manufacturer code is found by the intelligent communication terminal searching in the cloud server according to the model information.

In a tire pressure sensing system according to an embodiment of the present application, the model information includes: manufacturer information and model year information.

In the tire pressure sensing system provided by the present application, target acquisition data is sent to a cloud server via an intelligent communication terminal for storage or data analysis, thereby effectively utilizing the tire pressure sensing devices that have been arranged. At the same time, the intelligent communication terminal sends location information to the cloud server, and management personnel may collect the location distribution of all tire pressure sensing devices in use through the cloud server, which may effectively provide the anti-channel conflict management and facilitate the division of districts to which service providers, sales networks and after-sales teams belong through the cloud server. In addition, according to the location information of the sensors, the installation status of tire pressure sensing devices worldwide may be obtained, providing direction for future research and development.

### BRIEF DESCRIPTION OF THE DRAWINGS

In order to illustrate more clearly the technical solutions in the embodiments of the present application or the prior art, the drawings needed in the description of the embodiments or the prior art will be described briefly below. Obviously, the drawings in the following description show some embodiments of the present application. For those of ordinary skill in the art, other drawings may be obtained according to these drawings without paying creative labor.
FIG. 1 is a schematic diagram showing the structure of a tire pressure sensing system according to the present application; and
FIG. 2 is a schematic diagram showing a tire pressure sensing device according to the present application.

### Reference numerals:

101 cloud server 102 intelligent communication terminal
103 tire pressure sensing device

### DETAILED DESCRIPTION

In order to make the objectives, technical solutions and advantages of the present application clearer, the technical solutions in the embodiments of the present application will be described clearly and completely in conjunction with the drawings in the present application. Obviously, the described embodiments are part of the embodiments of the present application, not all of them. Based on the embodiments of the present application, all other embodiments obtained by those of ordinary skill in the art without creative work belong to the protection scope of the present application.

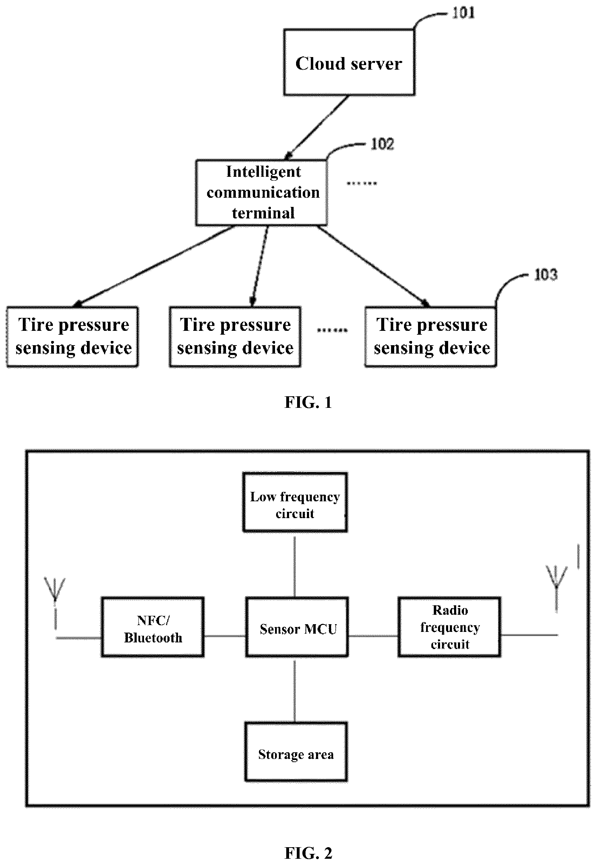

Hereinafter, a tire pressure sensing system of the present application will be described with reference to FIGS. 1-2.

FIG. 1 is a schematic diagram showing the structure of a tire pressure sensing system according to the present application. As shown in FIG. 1, the present application provides a tire pressure sensing system, including: a cloud server 101, an intelligent communication terminal 102 and tire pressure sensing devices 103; wherein the tire pressure sensing device 103 is provided with a tire pressure sensor, and is configured to send target acquisition data to the intelligent communication terminal 102 after establishing communication therewith; the target acquisition data includes an ID of the tire pressure sensing device; the intelligent communication terminal 102 is configured to send at least the ID of the tire pressure sensing device in the target acquisition data in combination with location information of the intelligent communication terminal 102 to the cloud server 101 after receiving the target acquisition data; and the cloud server 101 is configured to store and/or analyze the received target acquisition data.

In the present application, the tire pressure sensing system is cooperatively constructed by the cloud server 101, the intelligent communication terminal 102, and the tire pressure sensing device 103. There may be multiple tire pressure sensing devices 103, which communicate with the intelligent communication terminal 102 at the same time. The intelligent communication terminal 102 is used for communication and human-computer interaction with the tire pressure sensing device 103 or the cloud server 101. The intelligent communication terminal 102 includes a network module for data interaction with the cloud server 101 and a communication module for data interaction with the tire pressure sensing device 103.

The intelligent communication terminal 102 may specifically be a mobile phone, PAD, PC, etc., for example, a user installs a corresponding APP in a mobile phone, PAD, PC or other devices to realize the intelligent communication terminal; the intelligent communication terminal 102 may also be an exclusive device installed in an automotive after-sales maintenance hall, or a handheld device used by after-sales maintenance personnel; and the intelligent communication terminal 102 may also be an in-vehicle device. In the present application, the specific type of the intelligent communication terminal is not defined. The intelligent communication terminal 102 may interact with the tire pressure sensing device 103 and the cloud server 101 through a webpage or a software APP.

The tire pressure sensing device 103 is used for data acquisition and information reporting, and integrates sensor components to acquire the pressure inside the tire, that is, the sensor components include a tire pressure sensor. Alternatively, the tire pressure sensing device 103 may also integrate sensor components that acquire other information, such as any one or more of a temperature inside the tire, a voltage of the device, an acceleration of a tire, and the like. Correspondingly, the sensor components also include any one or more of a temperature sensor, a voltage sensor, and an acceleration sensor. The data acquired by the sensors, is combined with the acquired attribute information of the tire pressure sensing device (including at least the ID of the tire pressure sensing device, and also data such as the software and hardware versions) to constitute the target acquisition data. Specifically, the target acquisition data includes at least the ID of the tire pressure sensing device.

In the present application, after establishing communication with the intelligent communication terminal 102, the tire pressure sensing device 103 sends the obtained target acquisition data to the intelligent communication terminal 102. For example, the intelligent communication terminal 102 is a handheld device used by after-sales maintenance personnel, and the tire pressure sensing device 103 establishes communication with the intelligent communication terminal 102 at a maintenance facility; when the manufacturer code is updated, the tire pressure sensing device 103 sends the acquired target acquisition data to the intelligent communication terminal 102. If the intelligent communication terminal 102 is an in-vehicle device, the intelligent communication terminal 102 is connected to the tire pressure sensing device 103 after the user starts the vehicle, and the tire pressure sensing device 103 periodically sends the obtained target acquisition data to the intelligent communication terminal 102.

After receiving the target acquisition data, the acquisition communication terminal 102 sends at least the ID of the tire pressure sensing device in the target acquisition data to the cloud server 101. At the same time, the intelligent communication terminal 102 also sends its own location information to the cloud server 101, so that the cloud server 101 may obtain the ID of the tire pressure sensing device and the corresponding location information. The cloud server 101 may store the ID of the tire pressure sensing device and the corresponding location information, and/or perform data analysis of geographic location distribution.

The traditional tire pressure sensing programming device only enables the programming of the sensor during the programming process. In the programming process, only the programming of the sensor is completed, and the relevant data uploaded to the cloud during programming is not fully reused, thus it is impossible to communicate between the service backend and the terminal stores in real time. In the present application, the terminal store may communicate with the cloud server 101 through the intelligent communication terminal 102, and send the target acquisition data acquired by the tire pressure sensing device 103 to the cloud server for analysis.

Alternatively, the communication established between the tire pressure sensing device 103 and the intelligent communication terminal 102 includes the communication established when the tire pressure sensing device 103 is programmed through the intelligent communication terminal 102.

Alternatively, the cloud server 101 is configured to trace the circulation process of the tire pressure sensing device 103 based on the ID of the tire pressure sensing device and the acquired location information of the intelligent communication terminal 102 (the location information of the tire pressure sensing device is indirectly acquired). Specifically, the cloud server may determine the circulation of all tire pressure sensing devices based on the indirectly acquired position information of the tire pressure sensing devices 103.

In the tire pressure sensing system provided by the present application, the target acquisition data is sent to a cloud server via an intelligent communication terminal for storage or data analysis, thereby effectively utilizing the tire pressure sensing devices that have been arranged. At the same time, the intelligent communication terminal sends location information to the cloud server, and management personnel may collect the location distribution of all tire pressure sensing devices in use through the cloud server, which may effectively provide the anti-channel conflict management and facilitate the division of districts to which service providers, sales networks and after-sales teams belong through the cloud server. In addition, according to the location information of the tire pressure sensing devices, the installation status of tire pressure sensing devices worldwide may be obtained, providing direction for future research and development.

In an embodiment, the cloud server 101 is configured to push value-added services from the manufacturer of the tire pressure sensing device 103 to the intelligent communication terminal 102, wherein the value-added services include product information and marketing activities.

In an embodiment, the target acquisition data further contains: any one or more of an ex-factory date of the tire pressure sensing device, software and hardware versions of the tire pressure sensing device, a transmission protocol of the tire pressure sensing device, a transmission frequency of the tire pressure sensing device, a radio frequency modulation mode of the tire pressure sensing device, battery power of the tire pressure sensing device, tire pressure data, a temperature inside the tire , driving speed monitoring data and a vehicle model.

In an embodiment, the intelligent communication terminal 102 is further configured to, after receiving the target acquisition data, send all data in the target acquisition data, or a part of the data including the ID of the tire pressure sensing device, to the cloud server 101 for storage and/or data analysis.

The tire pressure sensing device 103 obtains a variety of target acquisition data. In order to enable the management of the tire pressure sensing device 103 by the cloud server 101, the target acquisition data may be selected from the following information of the tire pressure sensing device 103: a unique identification, the ex-factory date, the software and hardware versions, the transmission protocol, the transmission frequency, the radio frequency modulation mode, and the battery power. For example, the cloud server 101 may analyze the power data to determine whether a preset battery capacity for the usage cycle is set reasonably, and the preset battery capacity in subsequent products may be adjusted based on the results of the analysis.

The temperature inside the tire and the driving speed may be acquired to analyze the state of the tire. For the sake of analyzing the distribution of vehicle models equipped with the tire pressure sensing device 103 by the cloud server 101, the target acquisition data sent to the cloud server 101 includes vehicle models. On this basis, marketing strategies may be made for different vehicle models.

Alternatively, the cloud server 101 performs full life-cycle after-sales maintenance, problem tracing and information management of each tire pressure sensing device 103 based on the target acquisition data acquired by the tire pressure sensing device 103.

In an embodiment, the cloud server 101 is further configured to, after performing data analysis on the target acquisition data, store the obtained data analysis results and/or send the data analysis results to the intelligent communication terminal 102 for being displayed.

Alternatively, the cloud server 101 sends a maintenance or repair prompt to the intelligent communication device 102 according to the analysis results. The cloud server 101 analyzes the target acquisition data acquired and sent by the intelligent communication terminal 102, and then stores data analysis results locally. For example, the stored data analysis results may be used for active search by the intelligent communication terminal; after receiving a search request from the intelligent communication terminal 102, the cloud server 101 sends the corresponding data analysis results to the intelligent communication terminal. Alternatively, the analysis results can be directly sent to the intelligent communication terminal 102, and the user may know the real-time status of tire pressure sensing device and the tire through the intelligent communication terminal 102, and of course, it is also possible to store the data analysis results and meanwhile send the data analysis results to the intelligent communication terminal for being displayed. For example, an estimated duration of power usage is sent to the intelligent communication terminal 102 for being displayed, and the user may determine whether to replace the battery of the tire pressure sensing device or replace the tire pressure sensing device with a new one based on the power information.

In an embodiment, the data analysis results include an estimated lifetime of a tire and/or a current state of the tire. The cloud server 101 may analyze the running status of the tire according to the acquired tire pressure data and the time information when the tire pressure data is acquired, and obtain the estimated lifetime of the tire and/or the current state of the tire. At the same time, the analyzed data may include other data acquired by the tire pressure sensing device 103, such as temperature data and driving speed monitoring data. The data analysis results are sent to the intelligent communication device 102 for being displayed, such that the user is informed of the available lifetime of the tire, as well as the current status of the tire. For example, after analysis, it was concluded that the current status of the tire is in moderate wear and the estimated lifetime is 10,000 km left, which are sent to the intelligent communication device 102 to inform the user. Of course, it is also possible to store only for sending data after a request from an intelligent communication terminal.

In an embodiment, communication modes between the tire pressure sensing device 103 and the intelligent communication terminal 102 include any one or more of NFC, Bluetooth, WIFI, and LF/RF

Specifically, a single communication mode, or two or more communication modes may be adopted between the tire pressure sensing device 103 and the intelligent communication device 102.

Alternatively, if the communication mode between the intelligent communication device 102 and the tire pressure sensing device 103 is NFC, an antenna in an NFC module may be integrated on a PCB board or may be a separate component.

The current general-purpose configurable or programmable TPMS sensors basically adopt LF and RF for interactive communication, thus the interactive terminal must also have the functions of both LF and RF, and the code is mainly issued to the TPMS sensor through the terminal, both of which make the handheld device more expensive and bring additional expenses to the terminal user. On the other hand, in a wheel assembly factory, workers assemble a large number of tires every day during busy periods, and there are many assembly stations in the same assembly area, each of which emits RF when updating the data on the tire pressure sensing device 103. Therefore, when a certain tire pressure sensing device 103 is operated, it is absolutely possible to receive RF that does not correspond to the tire pressure sensing device 103, that is, serious co-frequency interference occurs.

In addition, when using LF/RF interactive communication, the tire pressure sensing device 103 sends out or receives from outside ASK/FSK radio wave signals, and such signals are very easy to be decrypted, causing serious danger to data security.

In the present application, the communication modes can be NFC, Bluetooth, WIFI, so as to avoid the shortcomings of co-frequency interference and easy to be decrypted in the traditional LF and RF. When NFC and Bluetooth are used for communication, LF/RF communication may also be supported at the same time, and these communication modes may be switched according to different application scenarios. For example, FIG. 2 is a schematic diagram of a tire pressure sensing device 103 according to the present application. As shown in FIG. 2, the tire pressure sensing device 103 simultaneously supports multiple communication modes which may be selected according to different application scenarios.

In an embodiment, the tire pressure sensing device 103 is further configured to upload attribute information to the cloud server 101 for pre-storage before delivery, and correspondingly: after establishing communication with the intelligent communication terminal 102, the tire pressure sensing device 103 sends the acquired latest attribute information to the cloud server 101 via the intelligent communication terminal 102, or the intelligent communication terminal 102 generates the latest attribute information according to communication data and send the latest attribute information to the cloud server 101; the cloud server 101 analyzes and obtains usage information of the tire pressure sensing device 103 according to pre-stored attribute information and the received latest attribute information; where the attribute information includes any one or more of the ID of the tire pressure sensing device, current time information, and power information; correspondingly, the usage information includes one or more of a time of first use of tire pressure sensing device, an elapsed time from delivery to first use, and a degree of power consumption.

Specifically, at least the ID information of all tire pressure sensing devices 103, and optionally also the production date (equivalent to the current time information before delivery) and the power value, are uploaded to the cloud server 101 in advance in a factory. When the sensor is programmed, the ID, current time, and current power of the tire pressure sensing device are uploaded to the cloud server 101 and then compared with the factory attribute information of the corresponding ID pre-stored in the background. In addition, the intelligent communication terminal may also generate the latest attribute data. For example, after the tire pressure sensing device establishes communication with the intelligent communication terminal, the ID of the tire pressure sensing device ID and the power information are sent to the intelligent communication terminal, or the intelligent communication terminal actively obtains the ID of the tire pressure sensing device and the power information. In other words, the ID of the tire pressure sensing device and the power information are included in the communication data. At the same time, the intelligent communication terminal may obtain the local time (the local time is included in the local data), generate new attribute data, and send it to the cloud server.

Based on this, it is possible to know when the customer started to use the tire pressure sensing device, an elapsed time from delivery to first use, and how much power has dropped during the period of non-use. Based on these usage data, adjustments in sales, production, and R&D can be made. For example, if the elapsed time from delivery to first use is too long, it is necessary to reduce production or increase promotion efforts; within a reasonable period of time, if the battery power consumption exceeds a threshold, the battery capacity needs to be increased by R&D.

It can be seen that based on the solution provided by this embodiment, the utilization rate of the existing tire pressure sensing device is greatly improved, and data support for sales, production, R&D and other aspects of the tire pressure sensing device may be provided.

Alternatively, when any tire pressure sensing device fails, the intelligent communication terminal 102 sends the ID of the faulty tire pressure sensing device and failure information to the cloud server 101, and obtains a solution prompt from the cloud server.

Further, the cloud server 101 associates and stores the ID of the faulty tire pressure sensing device and the failure information in association. Further, the cloud server 101 generates a fault diagnosis report and pushes it to relevant personnel or the intelligent communication terminal 103.

In an embodiment, the tire pressure sensing device 103 is provided with a storage area for storing model information and corresponding manufacturer codes; the tire pressure sensing device 103 is further configured to, after receiving a code update instruction and the model information sent by the intelligent communication terminal 102, search for and obtain a manufacturer code corresponding to the model information from the storage area according to the model information, and operate according to the obtained manufacturer code.

The tire pressure sensing device 103 is provided with a storage area for storing manufacturer code corresponding to each manufacturer. When performing the system coding, the intelligent communication terminal 102 may select the desired model information, and send the code update instruction and model information to the tire pressure sensing device 103 after establishing a communication with the tire pressure sensing device 103. It should be noted that the code update instruction does not need to be set separately, but only the sent model information is used as the code update instruction. Specifically, when the tire pressure sensing device 103 receives the model information, it is considered that a code update is required. The tire pressure sensing device 103 searches for the corresponding manufacturer code in the storage area according to the received model information, and operates based on the obtained manufacturer code, such as copying to the program running area for operation. The manufacturer code for specific model information is stored in the program running area which can be programmed multiple times.

Alternatively, the model information includes: manufacturer information and model year information.

Due to the characteristics of the technical field of the tire pressure sensing, button-sized batteries are generally used for power supply. In order to save power, the general LF (low frequency) communication rate is 3.9 Kbit/s, resulting in slow interaction speed and poor user experience.

In the tire pressure sensing system of the present application, the manufacturer code corresponding to each model is stored in the storage area of the tire pressure sensing device 103, so that there is no need to issue the manufacturer code to the tire pressure sensing device 103 through the terminal device, which enables more convenient operation and avoids the cost overhead caused by the expensive terminal devices. In addition, a preset manufacturer code for a single model may be stored in the running area of the tire pressure sensing device 103 at the factory and can be used directly without any operation. Since there is no need to transmit the code through LF and RF communication, the code update interaction speed is fast, which can avoid the poor user experience caused by the slow communication rate; and since there is no need to transmit the manufacturer code, poor user experiences such as programming errors are avoided.

In an embodiment, the tire pressure sensing device 103 is further configured to send query failure information to the intelligent communication terminal 102 when corresponding manufacturer code is not found in the storage area. The query failure information is used for informing the intelligent communication terminal 102 that there is no manufacturer code corresponding to the model information in the storage area.

In an embodiment, the model information and the corresponding manufacturer codes are stored in the cloud server 101; the intelligent communication terminal 102 is further configured to, after receiving the query failure information, obtain the manufacturer code corresponding to the model information from the cloud server 101 and send the manufacturer code to the tire pressure sensing device 103, and the tire pressure sensing device 103 operates according to the obtained manufacturer code.

In this system, the manufacturer code of each manufacturer are stored or analyzed in the cloud server 101 according to the different model information. The intelligent communication terminal 102 sends the model information to the cloud server 101 where the corresponding manufacturer code may be found.

When the tire pressure sensing device 103 does not find the corresponding manufacturer code in the storage area, it can request the corresponding manufacturer code from the cloud server 101 through the intelligent communication terminal 102. The cloud server 101 finds the corresponding manufacturer code from the pre-stored manufacturer code library and sends it to the intelligent communication terminal 102, and then the intelligent communication terminal 102 sends it to the tire pressure sensing device 103.

It can be seen that whether the corresponding manufacturer code is found from the storage area, or the corresponding manufacturer code is found from the pre-stored manufacturer code library by the cloud server 101 and sent to the tire pressure sensing device 103 via the intelligent communication terminal 102, the tire pressure sensing device 103 may finally obtain the corresponding manufacturer code and copy it to the program running area for code execution, thereby ensuring a successful code update.

In an embodiment, the model information and the corresponding manufacturer codes are stored in the cloud server 101; the tire pressure sensing device 103 is configured to operate according to the obtained manufacturer code after receiving the manufacturer code sent by the intelligent communication terminal 102; wherein the manufacturer code is obtained by the intelligent communication terminal 102 from the cloud server 101 according to the model information.

Specifically, after establishing communication with the tire pressure sensing device 103, the intelligent communication terminal 102 may search a matching manufacturer code directly from the cloud server 101 according to the model information, download the found manufacturer code into the tire pressure sensing device 103 and copy it to the program running area. This method may be implemented separately from the methods of the above-mentioned embodiments. For example, for some tire pressure sensing devices of older versions, the memory does not store the manufacturer codes of new models. In this case, the matching manufacturer code may be found directly from the cloud server 101 based on the model information, and the found manufacturer code is downloaded to the tire pressure sensing device 103.

In summary, the present application provides a tire pressure sensing system in which the cloud data utilization and real-time communication with terminal stores are achieved; programming efficiency and user experience can be improved; mistaken programming may be eliminated, and a 100% one-time success rate can be provided; simultaneous programming of multi-station and different protocols for sensor installation at factory may be provided; and programming tools can be eliminated, thereby reducing costs.

The above-mentioned system embodiments are merely illustrative, wherein, the units described as separate components may or may not be physically separated, and the components displayed as units may or may not be physical units, that is, they may be located at one place or distributed across multiple network units. Some or all of the modules may be selected according to the actual needs to achieve the purpose of the solutions of the present embodiments. Those of ordinary skill in the art can understand and implement them without paying creative labor.

Through the above description of implementations, those of ordinary skill in the art can clearly understand that the various embodiments can be implemented by means of software and necessary general hardware platform, and of course, by means of hardware. Based on such understanding, a part of the technical solutions, which is essential or contributes to the prior art, can be embodied in the form of software products. The computer software products can be stored in computer-readable storage media, such as ROM/RAM, magnetic disk, compact disk, which includes several instructions to cause a computer device (which can be a personal computer, server, or network device, etc.) to perform the methods described in various embodiments or a part of the embodiments.

Finally, it should be noted that the above embodiments are only used to illustrate the technical solutions of the present application, not to limit them; although the present application has been described in detail with reference to the above-mentioned embodiments, those of ordinary skill in the art should understand that they can still modify the technical solutions recorded in the above-mentioned embodiments, or make equivalent substitutions to a part of the technical features therein; these modifications or substitutions do not separate the essence of the corresponding technical solutions from the spirit and scope of the technical solutions of the embodiments of the present application.

## Claims

1. A tire pressure sensing system, comprising:
a cloud server, an intelligent communication terminal and tire pressure sensing devices; wherein
the tire pressure sensing device is provided with a tire pressure sensor, and is configured to send target acquisition data to the intelligent communication terminal after establishing communication with the intelligent communication terminal; the target acquisition data comprises an ID of the tire pressure sensing device;
the intelligent communication terminal is configured to send at least the ID of the tire pressure sensing device in the target acquisition data in combination with location information of the intelligent communication terminal to the cloud server after receiving the target acquisition data; and
the cloud server is configured to store and/or analyze the received target acquisition data.

2. The tire pressure sensing system of claim 1, wherein the target acquisition data further comprises: any one or more of an ex-factory date of the tire pressure sensing device, software and hardware versions of the tire pressure sensing device, a transmission protocol of the tire pressure sensing device, a transmission frequency of the tire pressure sensing device, a radio frequency modulation mode of the tire pressure sensing device, battery power of the tire pressure sensing device, tire pressure data, a temperature inside the tire, driving speed monitoring data and a vehicle model.

3. The tire pressure sensing system of claim 2, wherein the intelligent communication terminal is further configured to, after receiving the target acquisition data, send all data in the target acquisition data, or part of the data including the ID of the tire pressure sensing device, to the cloud server for storage and/or data analysis.

4. The tire pressure sensing system of claim 1 or 3, wherein the cloud server is further configured to, after performing data analysis on the target acquisition data, store data analysis results obtained and/or send the data analysis results to the intelligent communication terminal for being displayed;
wherein the data analysis results comprise an estimated lifetime of a tire and/or a current state of the tire.

5. The tire pressure sensing system of claim 1, wherein communication modes between the tire pressure sensing device and the intelligent communication terminal comprise any one or more of NFC, Bluetooth, WIFI, and LF/RF

6. The tire pressure sensing system of claim 1, wherein the tire pressure sensing device is further configured to upload attribute information to the cloud server for pre-storage before delivery, and correspondingly:
the tire pressure sensing device is further configured to, after establishing communication with the intelligent communication terminal, send acquired latest attribute information to the cloud server via the intelligent communication terminal;
or the intelligent communication terminal is further configured to generate latest attribute information according to received communication data and send the latest attribute information to the cloud server;
the cloud server is further configured to analyze and obtain usage information of the tire pressure sensing device according to pre-stored attribute information and received latest attribute information; and
wherein the attribute information comprises any one or more of the ID of the tire pressure sensing device, current time information, and power information;
correspondingly, the usage information comprises one or more of a time of first use of tire pressure sensing device, an elapsed time from delivery to first use, and a degree of power consumption.

7. The tire pressure sensing system of claim 1, wherein the tire pressure sensing device is provided with a storage area for storing model information and corresponding manufacturer codes; and
the tire pressure sensing device is further configured to, after receiving a code update instruction and the model information sent by the intelligent communication terminal, search for and obtain a manufacturer code corresponding to the model information from the storage area according to the model information, and operate according to the obtained manufacturer code.

8. The tire pressure sensing system of claim 7, wherein the tire pressure sensing device is further configured to send query failure information to the intelligent communication terminal when no corresponding manufacturer code is found in the storage area.

9. The tire pressure sensing system of claim 8, wherein the model information and the corresponding manufacturer codes are stored in the cloud server;
the intelligent communication terminal is further configured to, after receiving the query failure information, obtain the manufacturer code corresponding to the model information from the cloud server and send the manufacturer code to the tire pressure sensing device, for the tire pressure sensing device to operate according to the obtained manufacturer code.

10. The tire pressure sensing system of claim 1, wherein the model information and the corresponding manufacturer codes are stored in the cloud server;
the tire pressure sensing device is configured to operate according to the obtained manufacturer code after receiving the manufacturer code sent by the intelligent communication terminal;
wherein the manufacturer code is obtained by the intelligent communication terminal from the cloud server according to the model information.
